(19) Europäisches Patentamt
European Patent Office
Office européen des brevets

(11) **EP 2 392 022 B1**

(12) **EUROPÄISCHE PATENTSCHRIFT**

(45) Veröffentlichungstag und Bekanntmachung des Hinweises auf die Patenterteilung:
**26.04.2017   Patentblatt 2017/17**

(21) Anmeldenummer: **09778998.6**

(22) Anmeldetag: **30.01.2009**

(51) Int Cl.:
*H01H 33/56* (2006.01)    *G01L 19/00* (2006.01)
*H02B 13/065* (2006.01)    *G01F 22/02* (2006.01)

(86) Internationale Anmeldenummer:
**PCT/EP2009/051086**

(87) Internationale Veröffentlichungsnummer:
**WO 2010/086024 (05.08.2010 Gazette 2010/31)**

(54) **MESSEINRICHTUNG ZUM BESTIMMEN DER FÜLLMENGE EINES SF6-GASES IN EINER ISOLIERKAMMER ODER EINER SCHALTANLAGE UND DEMENTSPRECHENDES VERFARHEN**

MEASURING DEVICE FOR DETERMINING THE FILL QUANTITY OF SF6 GAS IN AN ISOLATION CHAMBER OR A SWITCHGEAR, AND CORRESPONDING METHOD

DISPOSITIF DE MESURE PERMETTANT DE DÉTERMINER LA QUANTITÉ DE GAZ SF6 DANS UNE CHAMBRE D'ISOLATION OU UNE INSTALLATION DE COMMUTATION ET PROCÉDÉ CORRESPONDANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**07.12.2011   Patentblatt 2011/49**

(73) Patentinhaber: **Wika Alexander Wiegand GmbH & CO. KG**
**63911 Klingenberg (DE)**

(72) Erfinder:
- **HECKLER, Thomas**
  **63920 Grossheubach (DE)**
- **BAUER, Nicolas**
  **64750 Sechmauern (DE)**
- **MÜLLER, Andreas**
  **63911 Klingenberg (DE)**

(74) Vertreter: **TBK**
**Bavariaring 4-6**
**80336 München (DE)**

(56) Entgegenhaltungen:
EP-A- 0 637 114    DE-A1- 3 428 322
DE-U1- 20 011 018    US-A- 4 262 532
US-A- 5 410 908    US-A1- 2006 025 955
US-A1- 2007 027 640    US-B1- 6 367 308
US-B1- 6 651 483

- **MEARS W H ET AL: "Physical Properties and Virial Coefficients of Sulfur Hexafluoride" JOURNAL OF PHYSICAL CHEMISTRY, AMERICAN CHEMICAL SOCIETY, US, Bd. 73, Nr. 7, 1. Juli 1969 (1969-07-01), Seiten 2254-2261, XP007909841 ISSN: 0022-3654**
- **BOEHM C ET AL: "GASRAUMPHILOSOPHIE FUER EINE SF6-ISOLIERTE MITTEL-SPANNUNGSSCHALTANLAGE" ELEKTROTECHNISCHE ZEITSCHRIFT - ETZ, VDE VERLAG GMBH, BERLIN, DE, Bd. 111, Nr. 12, 1. Juni 1990 (1990-06-01), Seiten 594-597, XP000137187 ISSN: 0948-7387**

**Beschreibung**

Die vorliegende Erfindung bezieht sich auf eine Messeinrichtung zum Bestimmen der Füllmenge eines $SF_6$-Gases in einer Isolierkammer oder einer Schaltanlage gemäß dem Oberbegriff des Anspruchs 1, dessen Merkmale aus der DE 34 28 322 A1 bekannt sind, sowie ein Verfahren zur Bestimmung der Füllmenge des $SF_6$-Gases in der Isolierkammer bzw. Schaltanlage und auf ein System zur Überwachung der Füllmenge des $SF_6$-Gases in der Isolierkammer bzw. Schaltanlage.

STAND DER TECHNIK

In der US 7,257,496 B2 ist ein Verfahren zum Überwachen eines $SF_6$-Gases in einem Hochspannungsbehälter beschrieben. Dabei wird ein Druck des in dem Behälter vorhandenen $SF_6$-Gases, eine Umgebungstemperatur des Behälters und eine Temperatur der Behälterwandaußenseite zu verschiedenen Messzeitpunkten gemessen. Anschließend wird ein Mittelwert aus den gemessenen Temperaturen berechnet und näherungsweise als $SF_6$-Gastemperatur in dem Behälter festgelegt. Aus einer Molzahl des $SF_6$-Gases, die aus dem gemessenen $SF_6$-Gasdruck und der berechneten Gastemperatur mit Hilfe des idealen Gasgesetzes ($p*V = n*R*T$) berechnet wird, wird aus der sich ergebenden linearen Werteentwicklung ein molares Verhältnis zu den verschiedenen Messzeitpunkten bestimmt. Nach 21 Tagen Messung wird ein Trend des Molverhältnisses aufgezeichnet und die Steigung des Trends wird mit einer maximal zulässigen Leckage verglichen. Mit Hilfe des Trends wird der Zeitpunkt berechnet, zu dem ein hinterlegter Grenzwert unterschritten wird. Bei diesem Verfahren werden die Messdaten zu einem zuständigen Bediener übertragen, der sich entfernt von dem Hochspannungsbehälter befindet.

Ein Problem des bekannten Stands der Technik liegt darin, dass die Umgebungs- und Oberflächentemperatur bzw. der Mittelwert aus Oberflächen- und Umgebungstemperatur des $SF_6$-Gasbehälters ungleich der wirklichen Gastemperatur sind. Darüber hinaus hat $SF_6$-Gas ein nicht-lineares Verhalten, wie es von einer typischen $SF_6$-Gas-Druck-Temperatur-Kennlinie bekannt ist. Das bedeutet, dass durch ein Anwenden des idealen Gasgesetzes zur Bestimmung einer Molzahl des $SF_6$-Gases lediglich annähernde Werte im Vergleich zum Anwenden eines Realgasansatzes erhalten werden, bei dem tatsächlich gemessene Werte zur Anwendung kommen. Außerdem hängt die Molzahl von der Genauigkeit der ersten Messung, d.h. der Referenzmessung ab, die bei Anwendung des idealen Gasgesetzes nur annähernd genau erhalten wird. Kleinste Leckagen können daher mit dem in diesem Stand der Technik beschriebenen Verfahren nicht erfasst werden.

Ein weiteres Problem des bekannten Stands der Technik liegt darin, dass eine Messung über 21 Tage i.d.R. nicht ausreicht, um eine zutreffende Aussage über das Verhalten des überwachten Behälters zu machen, da die zu erwartenden Leckageraten selbst nach einem Jahr noch keine signifikanten Änderungen der Füllmenge verursachen (ein Richtwert der Füllmengenänderung ist max. -0,5%/Jahr). Gleiches gilt für die Berechnung des zu erwartenden Zeitpunktes des Unterschreitens des hinterlegten Grenzwerts. Letztendlich liegt ein weiteres Problem darin, dass ein Ausfall der Datenübertragung zu dem zuständigen Bediener zu einem Ausfall der gesamten Überwachung führt.

Aus der Druckschrift DE 34 28 322 A1 ist ein Verfahren zum Überwachen von Isoliergas in Hochspannungsanlagen bekannt. Hier sind in einer Kammerwand diverse Sensoren wie z. B. ein Druck- und ein Temperatursensor angebracht. Aus Messdaten dieser Sensoren wird die Gasdichte des in der Kammer vorhandenen Isoliergases bestimmt und bei Unterschreiten eines voreingestellten Grenzwertes ein Alarm ausgelöst.

Die Druckschrift DE 200 11 018 U1 offenbart eine Einrichtung zur Füllstandsmessung in einem Behälter. An einem tiefsten Punkt des Behälters sind ein Druck-und ein Temperatursensor angebracht. Der Temperatursensor erfasst dabei die Temperatur einer Füllflüssigkeit des Drucksensors. Aus den ermittelten Druck-und Temperaturwerten wird der Füllstand ermittelt.

Der Erfindung liegt daher die Aufgabe zugrunde, die vorhergehend genannten Probleme des Stands der Technik zu lösen.

Diese Aufgabe wird mit einer Messeinrichtung nach Anspruch 1, einem Verfahren nach Anspruch 8 und einem Überwachungssystem nach Anspruch 12 gelöst. Vorteilhafte Ausgestaltungen der Erfindung sind in den Unteransprüchen aufgezeigt.

Die erfindungsgemäße Messeinrichtung zum Bestimmen der Füllmenge eines SF6-Gases in einer Isolierkammer weist einen Druckaufnehmer, ein Temperaturmesselement und eine Verarbeitungsvorrichtung zur Bestimmung der Füllmenge des Gases aus dem von dem Druckaufnehmer gemessenen Druckmesswert und dem von dem Temperaturmesselement gemessenen, zugehörigen Temperaturmesswert auf. Die Messeinrichtung ist dabei so angeordnet, dass sie eine Öffnung der Isolierkammer verschließt, so dass das zu messende SF6-Gas in die Messeinrichtung eindringen kann. Dadurch wird erreicht, dass sowohl der Druckaufnehmer als auch das Temperaturmesselement direkt mit dem zu messenden Gas beaufschlagt sind.

Das Temperaturmesselement ist ein Temperatursensor, der in die Messeinrichtung gasdicht eingeglast ist. Das bedeutet, dass die elektrische Verbindung zu dem Temperatursensor durch eine Einglasung aus dem mit SF6-Gas beaufschlagten Raum (Gasraum bzw. Tank) in der Messeinrichtung herausgeführt wird. Der Temperatursensor ist vorzugsweise ein PT100-Sensor, und die Isolierkammer ist vorzugsweise eine Hochspannungsschaltanlage, die mit $SF_6$-Isoliergas gefüllt ist.

Des Weiteren weist der Druckaufnehmer als druckaufnehmendes Element vorzugsweise eine Membran auf, die direkt mit dem $SF_6$-Gas beaufschlagt wird, wobei der Druck des $SF_6$-Gases über die Membran auf weitere Komponenten des Druckaufnehmers übertragen wird. Alternativ dazu kann der Druckaufnehmer ein in die Membran eingelassener Dehnmessstreifen, ein Piezo-Drucksensor usw. sein.

In der Messeinrichtung ist das Temperaturmesselement vorzugsweise so angeordnet, dass es der Membran des Druckaufnehmers in einer Richtung zu der Isolierkammer hin vorgelagert ist. Das bedeutet, dass die Messstelle, an der die Temperaturmessung des $SF_6$-Gases stattfindet, in der Messeinrichtung bezüglich der Isolierkammer direkt vor der Messstelle der Druckmessung des $SF_6$-Gases liegt. Dadurch kann sichergestellt werden, dass die gemessene Temperatur des $SF_6$-Gases dem gemessenen Druck des $SF_6$-Gases entspricht.

Des Weiteren ist die Messeinrichtung vorzugsweise von einem thermisch isolierenden Mantel umgeben, so dass die in der Messeinrichtung angeordneten Messelemente nach außen zu einer Umgebung hin thermisch isoliert sind. Eine Verfälschung der Messdaten, insbesondere eine Verfälschung der Temperaturmessdaten kann dadurch verhindert werden.

Die Verarbeitungsvorrichtung ist in der Messeinrichtung vorzugsweise so angeordnet, dass sie dem Druckaufnehmer und dem Temperaturmesselement in Richtung der Isolierkammer nachgelagert ist. Das bedeutet, dass die Verarbeitungsvorrichtung in der Messeinrichtung bezüglich der Isolierkammer hinter dem Temperaturmesselement und dem Druckaufnehmer angeordnet ist. Das Temperaturelement und der Druckaufnehmer geben ihre Messsignale an die Verarbeitungsvorrichtung ab, die diese Signale verarbeitet und ein der Füllmenge entsprechendes Signal ausgibt. Weiterhin vorzugsweise sind die Verarbeitungsvorrichtung, der Druckaufnehmer und das Temperaturmesselement in der Messeinrichtung im Wesentlichen koaxial angeordnet, so dass jeweilige Mittelachsen der Verarbeitungsvorrichtung, des Druckaufnehmers und des Temperaturmesselements im Wesentlichen übereinstimmen. Dadurch kann ein Einbau dieser Komponenten in die Messeinrichtung vor einem Anbringen der Messeinrichtung an der Isolierkammer erleichtert und eine räumliche Nähe sowie korrekte Relativlage der einzelnen Komponenten sichergestellt werden, wodurch u.a. ein Verfälschen der Messdaten aufgrund unerwünschter Berührung, langer Übertragungswege und anderer gegenseitiger Beeinflussung vermieden wird.

Die erfindungsgemäße Messeinrichtung gibt zusätzlich zu dem der Füllmenge entsprechenden Signal vorzugsweise ein der gemessenen Gastemperatur entsprechendes Signal aus. Dieses Gastemperatursignal kann dazu verwendet werden, einen Verlauf des Füllmengensignals über die Zeit zu glätten bzw. einen durch eine temperaturbedingte Volumenausdehnung der Isolierkammer bedingten Fehler des der Füllmenge entsprechenden Signals zu kompensieren. Die von der Messeinrichtung ausgegebenen Signale sind vorzugsweise analoge Signale, die dem 4-20mA-Standard entsprechen.

Mit der erfindungsgemäßen Messeinrichtung ist es möglich, bereits kleinste Leckagen der Isolierkammer zu erkennen und entsprechende Gegenmaßnahmen einzuleiten. Im Prinzip besteht die erfindungsgemäße Messeinrichtung also aus einem kombinierten Druck- und Temperatursensor, der ein füllmengenproportionales, analoges Ausgangssignal liefert. Das Füllmengensignal wird dabei im Wesentlichen aus einer Dichte des $SF_6$-Gases ermittelt, die auf einem gemessenen $SF_6$-Gasdrucksignal und einem gemessenen $SF_6$-Gastemperatursignal basierend errechnet ist, und wird anschließend weiter mit Hilfe der gemessenen Gastemperatur kompensiert. Bei der Bestimmung der $SF_6$-Gasdichte kommt vorzugsweise ein virialer Realgasansatz im Sinne einer Virialgleichung zur Anwendung und die Berechnung erfolgt intern in der Verarbeitungsvorrichtung der Messeinrichtung. Eine Virialgleichung ist eine Erweiterung der allgemeinen Gasgleichung durch eine Reihenentwicklung nach Potenzen von $1/V_m$. Bei einem Abbruch der Reihenentwicklung nach dem ersten Glied erhält man wiederum die allgemeine Gasgleichung. Führt man die Reihenentwicklung jedoch weiter, entsteht eine potenziell unendliche Zahl von Zustandsgleichungen mit einer zunehmenden Anzahl von Parametern. Der viriale Realgasansatz kann, im Gegensatz zu anderen Ansätzen wie z.B. dem idealen Gasgesetz, das nichtlineare Verhalten (Druck-Temperatur-Kennlinie) von $SF_6$-Gas hinreichend genau nachbilden.

Der viriale Realgasansatz basiert auf der allgemeinen (idealen) Gasgleichung ($p*V = n*R*T$), wobei ein Realgasfaktor Z integriert ist. Üblicherweise wird der Realgasfaktor Z jedoch nicht als eine feste Konstante angesehen, sondern wird als eine Funktion zum Beispiel der Temperatur betrachtet (Z(T)). Mit sich ändernder Temperatur ergeben sich andere Werte für Z. Analog kann man auch für die Größen Dichte oder Druck verfahren und den Realgasfaktor von diesen abhängig machen.

$$p = \rho * R_{SF6} * T * Z(T) \qquad\qquad (1)$$

Der Realgasfaktor enthält mindestens eine mit einem Exponenten versehene Variable, um eine Kurvenfunktion abzubilden, die dem realen Verhalten des $SF_6$-Gases entspricht. Dabei setzt sich der Realgasfaktor aus mehreren einzelnen Termen abhängig von der Temperatur sowie steigenden Potenzen der Dichte zusammen.

$$p = \rho * R_{SF6} * T * \left\{1 + B(T) * \rho + C(T) * \rho^2\right\} \qquad (2)$$

Zu beachten ist in Gleichung (2), dass die Dichte umgerechnet werden muss, so dass sie in der Einheit mol/L[15] vorliegt. Um das Ergebnis der Berechnung in bar zu erhalten, ist es notwendig, die allgemeine Gaskonstante in der Form

$$R = 0,0831434 \; J/(mol*K)$$

in Gleichung (2) einzusetzen. Die beiden Terme B(T) und C(T) in Gleichung (2) setzen sich jeweils aus mehreren Termen zusammen:

$$B(T) = B_0 + \frac{B_1}{T} + \frac{B_3}{T^3} + \frac{B_5}{T^5} \qquad (3)$$

$$C(T) = C_0 + C_1 * T + C_2 * T^2 \qquad (4)$$

Die Messung der $SF_6$-Gastemperatur findet entsprechend in einer in der Messeinrichtung integrierten Messkammer statt, in der auch das Temperaturmesselement und der Druckaufnehmer angeordnet sind und die eine direkte Verbindung zum zu überwachenden Gasraum der Isolierkammer hat. Durch die direkte Anbindung an den Gasraum bzw. Tank ist daher ein Gasaustausch gewährleistet, wodurch es ermöglicht wird, dass das Temperaturmesselement die tatsächliche Gastemperatur misst. Die Messkammer ist vom Rest der Messeinrichtung hermetisch abgeriegelt und gegen thermische Fehlereinflüsse von außen durch den thermisch isolierenden Mantel isoliert.

Die analogen Messelemente der erfindungsgemäßen Messvorrichtung sind vorzugsweise direkt an eine speicherprogrammierbare Steuerung (SPS) angeschlossen. In der SPS werden die lokalen Alarme zur Überwachung des sicheren Betriebs der Schaltanlage realisiert. Sollte eine plötzliche Leckage auftreten, gibt die SPS bei einem Unterschreiten eines eingestellten Grenzwertes einen entsprechenden Alarm aus, wodurch der sichere Betrieb der Schaltanlage gewährleistet werden kann. Zudem werden die analogen Signale in der SPS im Anschluss an die Messvorrichtung vorzugsweise digitalisiert (mind. 14bit A/D-Wandlung). Die SPS kann des Weiteren vorzugsweise mit einer lokalen Display-Anzeige verbunden sein. Über die Anzeige wird der aktuelle Dichtewert angezeigt. Die Anzeige kann eine Farbwechselfunktion aufweisen (z.B.: grüne Ziffern = OK, gelbe Ziffern = Grenzwert erreicht, rote Ziffern = 2. Grenzwert erreicht). Durch die Platzierung der SPS in direkter Umgebung der überwachten Schaltanlage, d.h. ohne Datenfernübertragung, und dadurch, dass die Alarmausgänge der SPS direkt mit der Steuerung der Schaltanlage verbunden sind, ist der sichere Betrieb der Schaltanlage jederzeit gewährleistet.

Die auf diese Weise digitalisierten Signale werden vorzugsweise mittels Datenfernübertragungstechnik an eine zentrale Datenbank gesendet. Eine spezielle Auswertesoftware, die auf die zentrale Datenbank zugreift, bietet die Möglichkeit, vorher ermittelte Kennlinien der Messelemente zu speichern sowie störende äußere Einflüsse (z.B. eine Volumenausdehnung des Gasraums bzw. Tanks) zu korrigieren. Die Korrektur der Volumenausdehnung erfolgt mittels der gemessenen Temperatur und eines hinterlegten Ausdehnungskoeffizienten des Tankmaterials. Die korrigierten Dichtewerte werden zur Analyse dauerhaft in der Datenbank abgelegt. Die Rohdaten werden archiviert. Weiterhin kann die Software im Zuge einer statistischen Auswertung (Methode kleinster Fehlerquadrate, Best Fit Straight Line) aus den Messdaten einen Trend der überwachten Füllmenge abschätzen. Das Ergebnis der Auswertung ist die tatsächliche Leckage, d.h. der tatsächliche $SF_6$-Gasverlust der zu überwachenden Schaltanlage. Der gefundene lineare Trend kann in der Datenbank abgelegt und je nach Anwenderwunsch, z.B. in eine Leckagerate oder in bereits emittierte Gasmasse umgewandelt werden. Dazu müssen lediglich Daten zu Größe (Volumen) und Solldichte des überwachten Tanks in der Auswertesoftware hinterlegt werden. Der Trend kann, insbesondere zu Anfang der Messung, auch über kürzere Zeiträume bestimmt werden. Da sich die Emissionsdaten jedoch generell auf einen Zeitraum von einem Jahr beziehen, können Auswertungen über kürzere Zeiträume nur bedingt für Aussagen zur Lecksituation des Tanks genutzt werden.

Die Analyse der Füllmenge über die $SF_6$-Gasdichte erfolgt in festen Zeiträumen, z.B. über ein Jahr, ein Quartal oder einen Monat.

Die Auswertung über ein Jahr liefert dabei die genauesten Ergebnisse, die Auswertungen über kürzere Zeiträume zeigen kurzfristige Änderungen der Leckage an. Die Auswertesoftware gibt einen entsprechenden Trend der Tankleckage aus. Im Gegensatz zu klassischen $SF_6$-Gas-Überwachungstechniken kann ein Anwender mit Hilfe des Leckagetrends die Wartung der Schaltanlage, bspw. ein Nachfüllen des $SF_6$-Gases, im Voraus planen. Die Auswertesoftware bietet weiterhin die Möglichkeit, Grenzwerte für die Tankleckage zu definieren. Werden die eingestellten Grenzwerte über- bzw. unterschritten, erhält der Anwender eine entsprechende Benachrichtigung und kann Gegenmaßnahmen, bspw. zur Abdichtung der Leckage, ergreifen.

Bei der erfindungsgemäßen Messeinrichtung werden alle Messwerte zu der Datenbank übertragen und in dieser abgelegt bzw. gespeichert. Diesen Messwerten entsprechend kann bspw. eine graphische Auswertung erstellt werden, die dem Anwender die benötigten Informationen bereitstellt. Dabei ist es denkbar, dass der Zugriff des Anwenders auf die Datenbank von jedem PC mit Internetzugang aus erfolgen kann, wobei dem Anwender z.B. ein passwortgeschützter Zugang ermöglicht wird. Alternativ können dem Anwender in regelmäßigen Abständen Berichte zur Verfügung gestellt werden, die die entsprechenden Angaben zum Gasverlust der Anlage enthalten. Dabei bietet die erfindungsgemäße Messeinrichtung die Möglichkeit, die Wartung der Schaltanlage im Voraus zu planen, sowie eine erhöhte Leckage festzustellen und Gegenmaßnahmen einzuleiten.

Das erfindungsgemäße Verfahren zur Bestimmung der Füllmenge des $SF_6$-Gases in der Isolierkammer umfasst einen Schritt des Messens des Drucks des Gases durch den Druckaufnehmer, einen Schritt des Messens der Temperatur des Gases unmittelbar durch das Temperaturmesselement, einen Schritt des Bestimmens der Dichte des Gases aus dem Gasdruckmesswert und dem zugehörigen Gastemperaturmesswert, einen Schritt des Ausgebens eines der Gasdichte entsprechenden Signals, einen Schritt des Ausgebens eines zugehörigen, der Gastemperatur entsprechenden Signals und einen Schritt des Ermittelns eines Trends zur Leckage der Isolierkammer. Das Verfahren weist des Weiteren vorzugsweise zudem einen Schritt auf, bei dem der durch eine temperaturbedingte Volumenausdehnung der Isolierkammer bedingter Fehler des Signals, das der Füllmenge entspricht, unter Verwendung des zugehörigen Gastemperatursignals kompensiert wird. Weiterhin wird bei dem Schritt des Bestimmens der Gasdichte vorzugsweise ein virialer Realgasansatz herangezogen.

Das erfindungsgemäße System zur Überwachung der Füllmenge des $SF_6$-Gases in der Isolierkammer, in der Hochspannungskomponenten enthalten sind, umfasst die erfindungsgemäße Messeinrichtung, wie sie vorhergehend beschrieben ist, sowie eine Auswerteeinheit zum Aufzeichnen des der Füllmenge entsprechenden Signals über die Zeit. Dabei wird das vorhergehend beschriebene erfindungsgemäße Verfahren verwendet, um einen Trend zur Leckage der Isolierkammer zu bestimmen. Vorzugsweise erfolgt die Übertragung der Signale an die Auswerteeinheit durch entsprechende Datenfernübertragungstechniken, wie z.B. durch Funktechnologie oder über das Internet.

KURZBESCHREIBUNG DER FIGUREN

Die Erfindung wird nachfolgend anhand eines bevorzugten Ausführungsbeispiels unter Bezugnahme auf die Figuren näher erläutert. In den Figuren zeigt:

Fig. 1 eine Schnittansicht einer erfindungsgemäßen Messeinrichtung im an einer Isolierkammer angeschlossenen Zustand gemäß dem bevorzugten Ausführungsbeispiel;

Fig. 2 eine beispielhafte schematische Ansicht einer der Messeinrichtung gemäß dem bevorzugten Ausführungsbeispiel nachgeschalteten, speicherprogrammierbaren Steuerung;

Fig. 3 zeigt verschiedene Arten von Kommunikationsmöglichkeiten zwischen der Messeinrichtung und einem Anwender;

Fig. 4 zeigt ein Diagramm, das einen Dichteverlauf des $SF_6$-Gases über die Zeit angibt;

Fig. 5 zeigt ein Diagramm, das einen fehlerkompensierten Dichteverlauf des $SF_6$-Gases angibt; und

Fig. 6 zeigt ein Diagramm, das eine vorbestimmte Ist-Kennlinie und die entsprechende Soll-Kennlinie der Messeinrichtung angibt.

BEVORZUGTES AUSFÜHRUNGSBEISPIEL DER ERFINDUNG

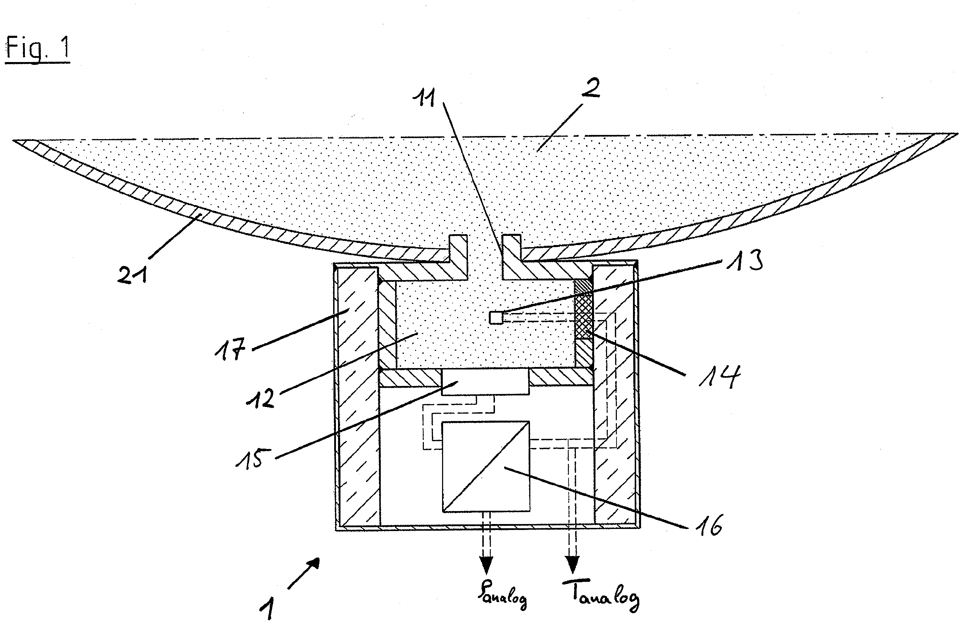

Fig. 1 zeigt eine Messeinrichtung 1 gemäß dem bevorzugten Ausführungsbeispiel der Erfindung. Die Messeinrichtung 1 ist an einer Öffnung in einer Außenwand 21 einer Isolierkammer 2 befestigt, wodurch die Öffnung in der Außenwand 21 gasdicht (hermetisch) abgeschlossen ist. Die Isolierkammer 2 ist mit $SF_6$-Gas gefüllt. Die Messeinrichtung 1 ist hier über ein Gewinde (nicht gezeigt) mit der Außenwand 21 verbunden. Alternativ dazu kann die Messeinrichtung 21 an der Außenwand 21 festgeschweißt oder in die Öffnung in der Außenwand 21 gepresst sein.

Durch eine Öffnung 11 in der Messeinrichtung 1 kann das $SF_6$-Gas in die Messkammer 12 eindringen. In der Messkammer 12 ist ein Temperaturmesselement 13 zum Messen der Temperatur des $SF_6$-Gases vorgesehen. Die elektrische Leitung des Temperaturmesselements 13 führt aus der Messkammer 12 heraus, wobei der Durchgang der Leitung aus der Messkammer 12 durch eine Einglasung 14 (d.h. in Glas eingeschmolzen) abgedichtet ist.

Ein Druckaufnehmer 15 ist des Weiteren in der Messkammer 12 angeordnet, wobei der Druckaufnehmer 15 in einer Rückwand der Messkammer 12 eingebettet ist. Der Druckaufnehmer 15 weist in dem bevorzugten Ausführungsbeispiel eine Druckmembran auf, die zu der Messkammer 12 hin freiliegt. Dadurch ist die Membran direkt mit $SF_6$-Gas beaufschlagt und der Druckaufnehmer 15 misst den Druck des $SF_6$-Gases in der Messkammer 12. In der Messkammer 12 ist das Temperaturmesselement 13 in unmittelbarer Nähe vor dem Druckaufnehmer 15 angeordnet, so dass ein gemessener Druck und eine gemessene Temperatur in der Messkammer 12 demselben $SF_6$-Gasanteil zugehörig sind. Die Membran ist hermetisch dicht mit der Messkammer 12 verbunden und verschließt diese.

Der Druckaufnehmer 15 und das Temperaturmesselement 13 sind mit einer Verarbeitungsvorrichtung 16 elektrisch verbunden, wobei der Druckaufnehmer 15 und das Temperaturmesselement 13 ihre jeweiligen Messsignale an die Verarbeitungsvorrichtung 16 übertragen. In der Verarbeitungsvorrichtung 16 wird aus dem analogen Drucksignal $p_{analog}$ und dem entsprechenden analogen Temperatursignal $T_{analog}$ ein analoges Dichtesignal $\rho_{analog}$ des $SF_6$-Gases mit Hilfe des früher beschriebenen virialen Realgasansatzes ermittelt und ausgegeben. Zudem wird von dem Temperaturmesselement 13 das gemessene, analoge Temperatursignal $T_{analog}$ auch direkt ausgegeben.

Die Messeinrichtung 1 stellt eine geschlossene, fluiddichte Einheit dar, in der das Temperaturmesselement 13, der Druckaufnehmer 15 und die Verarbeitungsvorrichtung 16 im Wesentlichen koaxial zueinander so angeordnet sind, dass das Temperaturmesselement 13 bezüglich der Isolierkammer 2 in der Messkammer 12 vor dem Druckaufnehmer 15 und dieser wiederum vor der Verarbeitungsvorrichtung 16 angeordnet sind. Diese innere Anordnung in der Messeinrichtung 1 ist durch einen thermisch isolierenden Mantel 17 gegen äußere thermische Einflüsse isoliert. Der thermisch isolierende Mantel 17 kann aus einem Dämmstoff, wie z.B. einem thermisch isolierenden Kunststoffschaum bestehen.

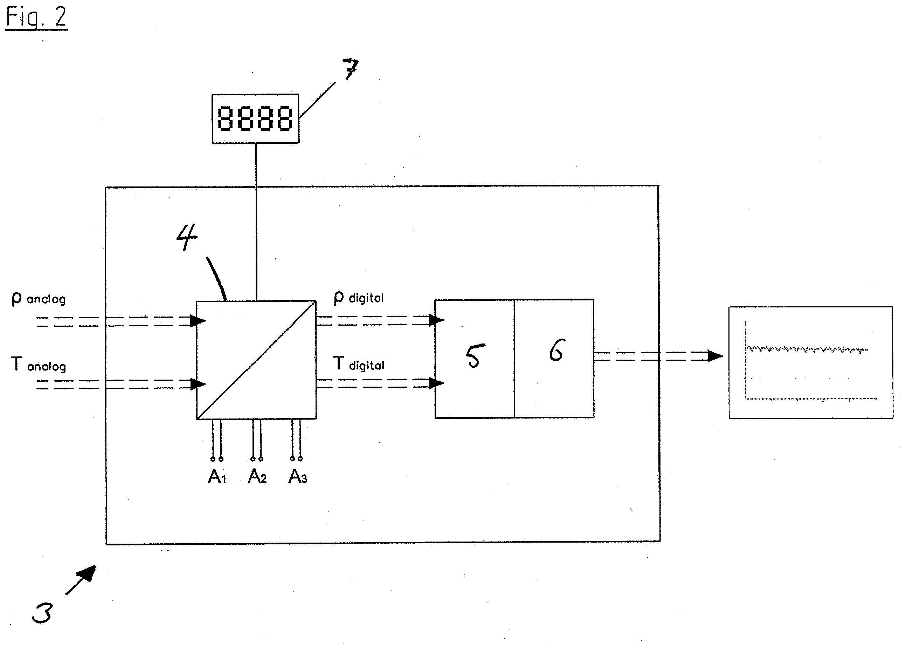

Fig. 2 zeigt schematisch eine der Messeinrichtung 1 nachgelagerte Steuerungsvorrichtung 3, die eine speicherprogrammierbare Steuerung (SPS) beinhaltet und bei der die von der Messeinrichtung 1 ausgegebenen analogen Temperatur- und Dichtesignale $\rho_{analog}$, $T_{analog}$ als Eingangssignale verwendet werden. In der Steuerungsvorrichtung 3 werden die analogen Ausgangssignale $\rho_{analog}$, $T_{analog}$ der Messeinrichtung 1 in einem Analog-DigitalWandler 4 zu digitalen Signalen $\rho_{digital}$, $T_{digital}$ umgewandelt. Die digitalen Signale $\rho_{digital}$, $T_{digital}$ werden in einem Speicher 5 zwischengespeichert und als Datenpaket über eine Kommunikationsschnittstelle 6 bidirektional weiterkommuniziert, z.B. an einem Server, wobei die weiterkommunizierten Signale letztendlich zur Erstellung einer Trendkurve durch eine Auswertesoftware dienen. Die Steuerung stellt für bestimmte voreingestellte Dichtewerte programmierbare Alarmkontakte $A_1$, $A_2$, $A_3$ etc. bereit, um ein kritisches Absinken der $SF_6$-Gasdichte anzuzeigen. Des Weiteren kann der aktuell gemessene Füllstand über eine zusätzliche Display-Anzeige 7 als Ist-Wert direkt an bzw. in der Nähe der Isolierkammer 2 angezeigt werden.

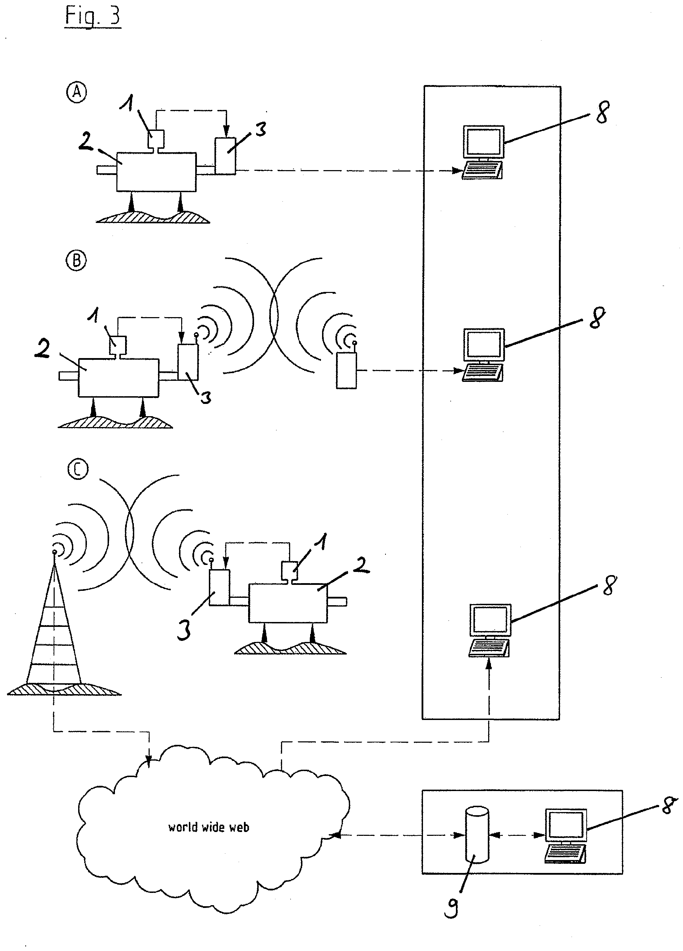

Fig. 3 zeigt verschiedene mögliche Arten der Datenfernübertragung der von der Messeinrichtung 1 in der Isolierkammer 2 gemessenen und von der Steuerungsvorrichtung 3 weiterverarbeiteten Signale an eine Auswerteeinrichtung 8, die die Auswertesoftware ausführt. Im Fall A von Fig. 3 werden die von der Steuerungseinrichtung 3 ausgehenden Informationen direkt an die Auswerteeinrichtung 8 übertragen, z.B. über eine feste, unterirdische Leitung. Im Fall B von Fig. 3 werden die von der Steuerungseinrichtung 3 ausgehenden Informationen per Funkübertragung an die Auswerteeinrichtung 8 übertragen. Im Fall C von Fig. 3 werden die von der Steuerungseinrichtung 3 ausgehenden Informationen per Funk in ein Rechnernetzwerk, wie z.B. das Internet (world wide web) eingespeist und über einen Server 9 an die Auswerteeinrichtung 8 übermittelt.

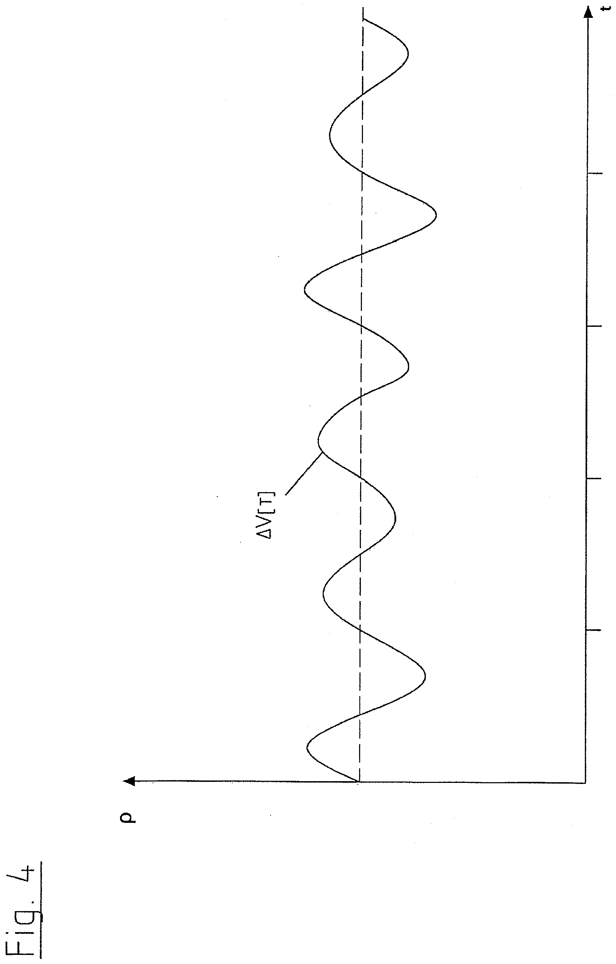

In Fig. 4 ist ein Dichteverlauf der $SF_6$-Gasfüllmenge über die Zeit t in einem Diagramm gezeigt. In dieser Ansicht entspricht der Abstand zwischen 2 Strichen auf der Zeitachse einem Tag. Dabei kann man erkennen, wie sich die Dichte $\rho$ über den Tag hinweg durch bspw. ein Aufwärmen der Isolierkammer 2 verändert. Aus diesem Diagramm ist klar zu erkennen, dass das auf Normwerte umgerechnete Füllvolumen V stark von einer Temperatur in der Isolierkammer 2 und damit von einer $SF_6$-Gastemperatur abhängig ist.

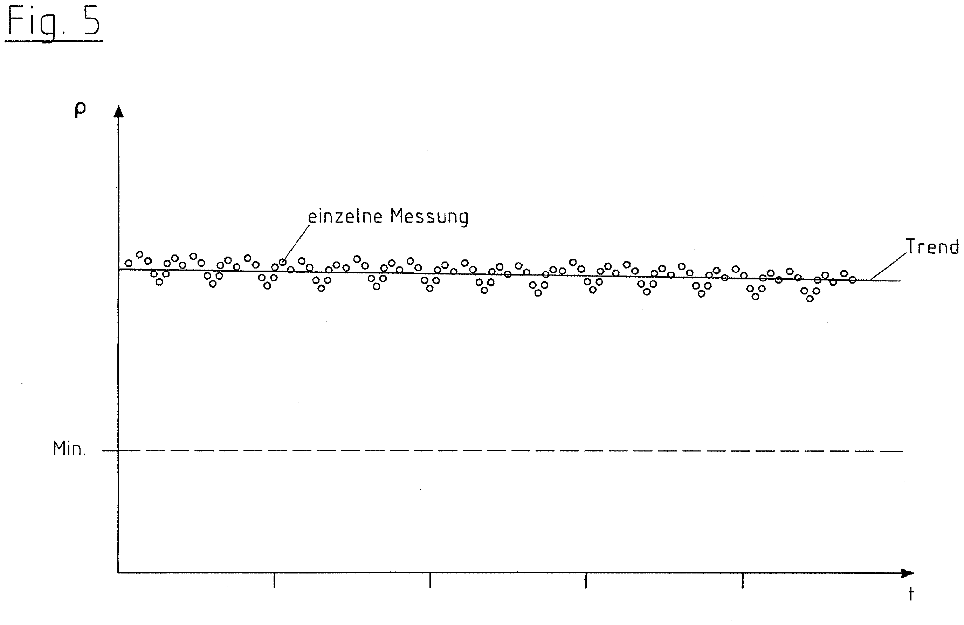

Fig. 5 zeigt ein Diagramm, dass einen temperaturkompensierten Verlauf der $SF_6$-Gasdichte p der einzelnen Messungen über die Zeit t angibt. Dazu wird die $SF_6$-Gastemperatur zu jeder Messung als Kompensationsfaktor verrechnet, um die temperaturbedingte Volumenausdehnung der Isolierkammer 2 zu kompensieren. Der Trend der $SF_6$-Gasdichte p ist in dem Diagramm ebenfalls gezeigt. Dabei ist zu erkennen, dass die Trendlinie leicht nach unten geneigt ist und sich einem minimalen Grenzwert Min. langsam annähert. Bei Erreichen des minimalen Grenzwerts Min. kann bspw. von der Auswerteeinrichtung 8 eine akustische oder visuelle Warnung an einen Anwender ausgegeben werden, so dass Gegenmaßnahmen eingeleitet werden können. Zudem kann bspw. die Display-Anzeige 7 ein visuelles Signal direkt vor Ort in der Nähe der Isolierkammer 2 an einen Anwender, wie z.B. Wartungspersonal ausgeben.

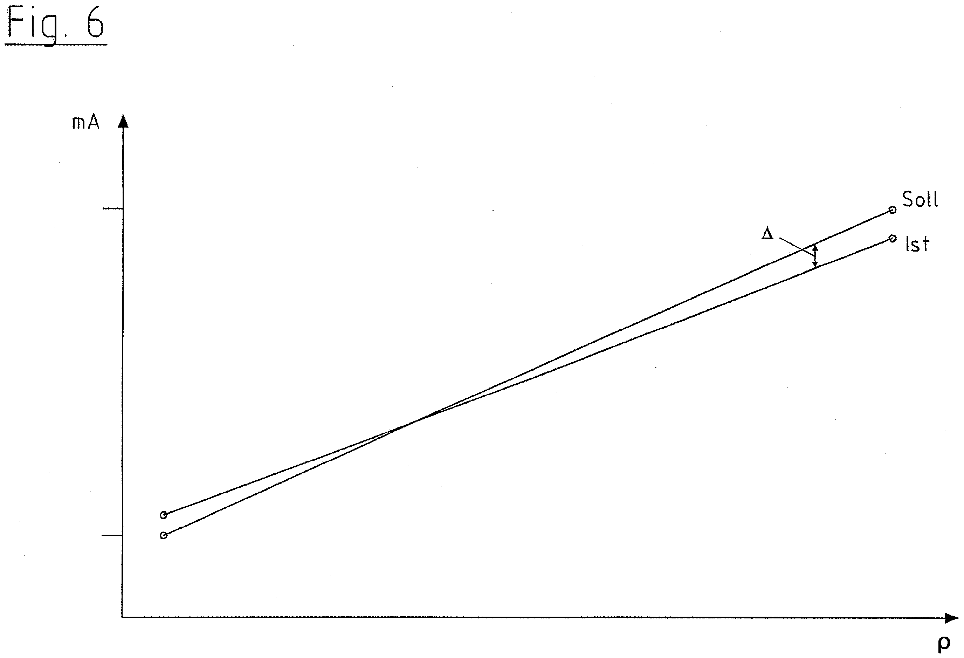

In dem Diagramm von Fig. 6 ist eine vorbestimmte Ist-Kennlinie und die entsprechende Soll-Kennlinie der Messeinrichtung 1 angegeben. Aus diesen Kennlinien kann ein Signalunterschied $\Delta$ bestimmt werden, um den sich der

Ist-Verlauf der SF$_6$-Gasdichte p im Vergleich zum Soll-Verlauf verändert hat.

**Patentansprüche**

1. Messeinrichtung (1) zum Bestimmen der Füllmenge eines SF$_6$-Gases in einer Isolierkammer (2), mit einem Druckaufnehmer (15), einem Temperaturmesselement (13) und einer Verarbeitungsvorrichtung (16) zur Bestimmung der Füllmenge des SF$_6$-Gases aus dem Druckmesswert und dem zugehörigen Temperaturmesswert, wobei die Messeinrichtung (1) eine Öffnung der Isolierkammer (2) verschließend angeordnet ist und eine Messkammer (12) aufweist, in der sowohl der Druckaufnehmer (15) als auch das Temperaturmesselement (13) angeordnet und direkt mit dem zu messenden SF$_6$-Gas beaufschlagt sind
**dadurch gekennzeichnet, dass**
das Temperaturmesselement (13) ein in die Messeinrichtung (1) gasdicht eingeglaster Temperatursensor (13) ist, und
das Temperaturmesselement (13) in der Messeinrichtung (1) der Membran des Druckaufnehmers (15) in Richtung der Isolierkammer (2) vorgelagert angeordnet ist.

2. Messeinrichtung (1) nach einem der vorangehenden Ansprüche, wobei die Messeinrichtung (1) von einem thermisch isolierenden Mantel (17) umgeben ist.

3. Messeinrichtung (1) nach einem der vorangehenden Ansprüche, wobei die Isolierkammer (2) eine Hochspannungsschaltanlage ist, die mit SF$_6$-Isoliergas gefüllt ist.

4. Messeinrichtung (1) nach einem der vorangehenden Ansprüche, wobei die Verarbeitungsvorrichtung (16) in der Messeinrichtung (1) dem Druckaufnehmer (15) und dem Temperaturmesselement (13) in Richtung der Isolierkammer (2) nachgelagert angeordnet ist und ein der Gasfüllmenge entsprechendes Signal ausgibt.

5. Messeinrichtung (1) nach einem der vorangehenden Ansprüche, wobei die Verarbeitungsvorrichtung (16), der Druckaufnehmer (15) und das Temperaturmesselement (13) in der Messeinrichtung (1) im Wesentlichen koaxial angeordnet sind.

6. Messeinrichtung (1) nach Anspruch 5, wobei die Messeinrichtung (1) zusätzlich zu dem der Gasfüllmenge entsprechenden Signal ein der Gastemperatur entsprechendes Signal ausgibt.

7. Messeinrichtung (1) nach einem der vorangehenden Ansprüche, wobei die ausgegebenen Signale analoge Signale sind und gemäß dem 4-20mA-Standard ausgegeben werden.

8. Verfahren zur Bestimmung der Füllmenge eines SF$_6$-Gases in einer Isolierkammer (2), wobei
eine Messeinrichtung (1) eine Öffnung der Isolierkammer (2) verschließt und einen Druckaufnehmer (15), ein Temperaturmesselement (13) in Form eines gasdicht in die Messeinrichtung (1) eingeglasten Temperatursensors (13) und eine Verarbeitungsvorrichtung (16) aufweist;
der Druckaufnehmer (15) eine Membran aufweist;
die Membran des Druckaufnehmers (15) und das Temperaturmesselement (13) direkt mit dem zu messenden SF$_6$-Gas beaufschlagt sind, und
das Verfahren die folgenden Schritte aufweist:

Messen des Drucks des SF$_6$-Gases durch den Druckaufnehmer (15);
Messen der Temperatur des SF$_6$-Gases unmittelbar durch das Temperaturmesselement (13), wobei das Temperaturmesselement (13) in der Messeinrichtung (1) der Membran des Druckaufnehmers (15) in Richtung der Isolierkammer (2) vorgelagert angeordnet ist;
Bestimmen der Dichte des SF$_6$-Gases aus dem Gasdruckmesswert und dem zugehörigen Gastemperaturmesswert;
Bestimmen der Füllmenge des SF$_6$-Gases aus der Dichte des SF$_6$-Gases;
Ausgeben eines der Füllmenge entsprechenden Signals;
Ausgeben eines zugehörigen, der Gastemperatur entsprechenden Signals; und
Ermitteln eines Trends zur Leckage der Isolierkammer (2).

9. Verfahren nach Anspruch 8, wobei ein durch eine temperaturbedingte Volumenausdehnung der Isolierkammer (2) bedingter Fehler des der Füllmenge entsprechenden Signals unter Verwendung des zugehörigen, der Gastemperatur entsprechenden Signals kompensiert wird.

10. Verfahren nach einem der Ansprüche 8 und 9, wobei bei dem Schritt des Bestimmens der Dichte des $SF_6$-Gases ein virialer Realgasansatz herangezogen wird.

11. Verfahren nach Anspruch 10, wobei der viriale Realgasansatz auf der allgemeinen Gasgleichung basiert, die mit einem Realgasfaktor ergänzt wird, wobei der Realgasfaktor mindestens eine mit einem Exponenten versehene Variable enthält, um eine Kurvenfunktion abzubilden, die dem realen Verhalten des $SF_6$-Gases entspricht.

12. System zur Überwachung der Füllmenge eines $SF_6$-Gases in einer Hochspannungskomponenten aufweisenden Isolierkammer (2), das eine Messeinrichtung (1) gemäß einem der Ansprüche 1 bis 7 und eine Auswerteeinrichtung (8) zum Aufzeichnen des der Füllmenge entsprechenden Signals über die Zeit umfasst, wobei ein Verfahren nach einem der Ansprüche 9 bis 11 verwendet wird, um einen Trend zur Leckage der Isolierkammer (2) zu bestimmen.

13. Überwachungssystem nach Anspruch 12, wobei die Signalübertragung an die Auswerteeinrichtung (8) durch Datenfernübertragungstechnik erfolgt.

**Claims**

1. Measuring device (1) for determining the fill quantity of an $SF_6$ gas in an insulating chamber (2), comprising a pressure transducer (15), a temperature measuring element (13) and a processing apparatus (16) for determining the fill quantity of $SF_6$ gas from the pressure measurement value and the associated temperature measurement value, wherein the measuring device (1) is arranged so as to close an opening in the insulating chamber (2) and has a measuring chamber (12) in which both the pressure transducer (15) and the temperature measuring element (13) are arranged and are acted on directly by the $SF_6$ gas which is to be measured,
**characterized in that**
the temperature measuring element (13) is a temperature sensor (13) which is vitreously sealed into the measuring device (1) in a gas-tight manner, and
the temperature measuring element (13) is arranged in the measuring device (1) upstream of the diaphragm of the pressure transducer (15) in the direction of the insulating chamber (2).

2. Measuring device (1) according to one of the preceding claims, wherein the measuring device (1) is surrounded by a thermally insulating casing (17).

3. Measuring device (1) according to either of the preceding claims, wherein the insulating chamber (2) is a high-voltage switchgear assembly which is filled with $SF_6$ insulating gas.

4. Measuring device (1) according to one of the preceding claims, wherein the processing apparatus (16) is arranged in the measuring device (1) downstream of the pressure transducer (15) and the temperature measuring element (13) in the direction of the insulating chamber (2) and outputs a signal which corresponds to the gas fill quantity.

5. Measuring device (1) according to one of the preceding claims, wherein the processing apparatus (16), the pressure transducer (15) and the temperature measuring element (13) are arranged substantially coaxially in the measuring device (1).

6. Measuring device (1) according to Claim 5, wherein the measuring device (1) outputs a signal which corresponds to the gas temperature, in addition to the signal which corresponds to the gas fill quantity.

7. Measuring device (1) according to one of the preceding claims, wherein the output signals are analogue signals and are output in accordance with the 4-20 mA standard.

8. Method for determining the fill quantity of an $SF_6$ gas in an insulating chamber (2), wherein
a measuring device (1) closes an opening in the insulating chamber (2) and has a pressure transducer (15), a temperature measuring element (13) in the form of a temperature sensor (13) which is vitreously sealed into the measuring device (1) in a gas-tight manner, and a processing apparatus (16);
the pressure transducer (15) has a diaphragm;

the diaphragm of the pressure transducer (15) and the temperature measuring element (13) are acted on directly by the $SF_6$ gas which is to be measured, and the method comprises the following steps of:

measuring the pressure of the $SF_6$ gas using the pressure transducer (15);

measuring the temperature of the $SF_6$ gas directly using the temperature measuring element (13), wherein the temperature measuring element (13) is arranged in the measuring device (1) upstream of the diaphragm of the pressure transducer (15) in the direction of the insulating chamber (2);

determining the density of the $SF_6$ gas from the gas pressure measurement value and the associated gas temperature measurement value;

determining the fill quantity of the $SF_6$ gas from the density of the $SF_6$ gas;

outputting a signal which corresponds to the fill quantity;

outputting an associated signal which corresponds to the gas temperature; and

ascertaining a trend of leakage from the insulating chamber (2).

9.  Method according to Claim 8, wherein a fault in the signal which corresponds to the fill quantity, which fault is caused by a temperature-related expansion in volume of the insulating chamber (2), is compensated for using the associated signal which corresponds to the gas temperature.

10. Method according to either of Claims 8 and 9, wherein a virial real gas approach is used in the step of determining the density of the $SF_6$ gas.

11. Method according to Claim 10, wherein the virial real gas approach is based on the general gas equation to which a real gas factor is added, wherein the real gas factor contains at least one variable which is provided with an exponent in order to map a curve function which corresponds to the real response of the $SF_6$ gas.

12. System for monitoring the fill quantity of an $SF_6$ gas in an insulating chamber (2) which has high-voltage components, which system comprises a measuring device (1) according to one of Claims 1 to 7 and an evaluation device (8) for recording the signal which corresponds to the fill quantity over time, wherein a method according to one of Claims 9 to 11 is used in order to determine a trend of leakage from the insulating chamber (2).

13. Monitoring system according to Claim 12, wherein signal transmission to the evaluation device (8) is performed by remote data transmission technology.

## Revendications

1.  Dispositif de mesure (1) destiné à déterminer la quantité d'un gaz SF6 dans une chambre isolante (2), comportant un capteur de pression (15), un élément de mesure de température (13) et un dispositif de traitement (16) permettant de déterminer la quantité de gaz $SF_6$ à partir de la valeur de mesure de pression et de la valeur de mesure de température associée, dans lequel le dispositif de mesure (1) est disposé de manière à fermer une ouverture de la chambre isolante (2) et comporte une chambre de mesure (12) dans laquelle sont disposés le capteur de pression (15) ainsi que l'élément de mesure de température (13) et dans laquelle ils sont directement exposés au gaz $SF_6$ à mesurer,
    **caractérisé en ce que** l'élément de mesure de température (13) est un capteur de température (13) vitrifié de manière étanche aux gaz dans le dispositif de mesure (1), et
    l'élément de mesure de température (13) est disposé dans le dispositif de mesure (1) en amont de la membrane du capteur de pression (15) dans la direction de la chambre isolante (2).

2.  Dispositif de mesure (1) selon l'une quelconque des revendications précédentes, dans lequel le dispositif de mesure (1) est entouré d'une chemise thermiquement isolante (17).

3.  Dispositif de mesure (1) selon l'une quelconque des revendications précédentes, dans lequel la chambre isolante (2) est un système de commutation à haute tension qui est rempli de gaz $SF_6$ isolant.

4.  Dispositif de mesure (1) selon l'une quelconque des revendications précédentes, dans lequel le dispositif de traitement (16) est disposé dans le dispositif de mesure (1) en aval du capteur de pression (15) et de l'élément de mesure de température (13) dans la direction de la chambre isolante (2) et délivre un signal correspondant à la quantité de gaz.

**5.** Dispositif de mesure (1) selon l'une quelconque des revendications précédentes, dans lequel le dispositif de traitement (16), le capteur de pression (15) et l'élément de mesure de température (13) sont disposés sensiblement coaxialement dans le dispositif de mesure (1).

**6.** Dispositif de mesure (1) selon la revendication 5, dans lequel le dispositif de mesure (1) délivre en plus du signal correspondant à la quantité de gaz un signal correspondant à la température du gaz.

**7.** Dispositif de mesure (1) selon l'une quelconque des revendications précédentes, dans lequel les signaux sont des signaux analogiques et sont délivrés conformément à la norme 4-20mA.

**8.** Procédé de détermination de la quantité d'un gaz $SF_6$ dans une chambre isolante (2), dans lequel un dispositif de mesure (1) ferme une ouverture de la chambre isolante (2) et comporte un capteur de pression (15), un élément de mesure de température (13) sous la forme d'un capteur de température (13) vitrifié de manière étanche aux gaz dans le dispositif de mesure (1) et un dispositif de traitement (16) ;

le capteur de pression (15) comporte une membrane ;

la membrane du capteur de pression (15) et l'élément de mesure de température (13) sont directement exposés au gaz $SF_6$ à mesurer, et

le procédé comprend les étapes consistant à :

mesurer la pression du gaz $SF_6$ au moyen du capteur de pression (15) ;

mesurer directement la température du gaz $SF_6$ au moyen de l'élément de mesure de température (13), dans lequel l'élément de mesure de température (13) est disposé dans le dispositif de mesure (1) en amont de la membrane du capteur de pression (15) dans la direction de la chambre isolante (2) ;

déterminer la densité du gaz $SF_6$ à partir la valeur de mesure de pression du gaz et de la valeur de mesure de température du gaz associée ;

déterminer la quantité de gaz $SF_6$ à partir de la densité du gaz $SF_6$ ;

délivrer un signal correspondant à la quantité ;

délivrer un signal associé correspondant à la température du gaz ; et

déterminer une tendance à la fuite de la chambre isolante (2).

**9.** Procédé selon la revendication 8, dans lequel une erreur provoquée par une expansion volumétrique liée à la température de la chambre isolante (2) affectant le signal correspondant à la quantité est compensée par utilisation du signal associé correspondant à la température du gaz.

**10.** Procédé selon l'une quelconque des revendications 8 et 9, dans lequel, lors de l'étape de détermination de la densité du gaz $SF_6$, on utilise un état de gaz réel viriel.

**11.** Procédé selon la revendication 10, dans lequel de l'état de gaz réel viriel est fondé sur l'équation générale des gaz, qui est complétée par un facteur de gaz réel, dans lequel le facteur de gaz réel contient au moins une variable dotée d'un exposant, pour établir une courbe caractéristique qui correspond au comportement réel du gaz $SF_6$.

**12.** Système de surveillance de la quantité d'un gaz $SF_6$ dans une chambre isolante (2) comportant des composants à haute tension qui comprend un dispositif de mesure (1) selon l'une des revendications 1 à 7 et un dispositif d'évaluation (8) destiné à l'enregistrement du signal correspondant à la quantité au cours du temps, dans lequel on utilise un procédé selon l'une quelconque des revendications 9 à 11 pour déterminer une tendance à la fuite de la chambre isolante (2).

**13.** Système de surveillance selon la revendication 12, dans lequel la transmission de signaux au dispositif d'évaluation (8) est effectuée par une technique de transmission de données.

Fig. 1

Fig. 2

Fig. 3

Fig. 4

EP 2 392 022 B1

Fig. 5

EP 2 392 022 B1

Fig. 6

EP 2 392 022 B1

**IN DER BESCHREIBUNG AUFGEFÜHRTE DOKUMENTE**

**In der Beschreibung aufgeführte Patentdokumente**

- DE 3428322 A1
- US 7257496 B2

- DE 20011018 U1